# EUROPÄISCHE PATENTSCHRIFT

(11) **EP 0 638 351 B1**
(45) Veröffentlichungstag und Bekanntmachung des Hinweises auf die Patenterteilung: **02.10.1996**
(21) Anmeldenummer: 94202129.6
(22) Anmeldetag: 21.07.1994
(51) Int. Cl.: B01D 53/64, B01D 53/04, B01J 20/18, B01D 53/82

(54) **Verfahren zum Entfernen von Quecksilber aus Wasserdampf und SO2 enthaltenden Abgasen**
Process for removing mercury from H20 and S02 containing waste gases
Procédé d'élimination du mercure de gaz d'échappement conenant d'H20 et S02

(30) Priorität: 06.08.1993 DE 4326450
(43) Veröffentlichungstag der Anmeldung: 15.02.1995
(73) Patentinhaber: METALLGESELLSCHAFT AG, D-60323 Frankfurt am Main (DE)
(72) Erfinder: Cornel, Peter, Dr., D-60389 Frankfurt am Main (DE); Bräuer, Hans Werner, Dr., D-35510 Butzbach (DE); Rolke, Dietrich, Dr., D-65719 Hofheim (DE)

(56) Entgegenhaltungen:
- EP-A- 0 145 539
- DE-A- 4 128 106
- DE-A- 4 212 071
- FR-A- 2 529 802
- US-A- 4 101 631

## Beschreibung

Die Erfindung betrifft ein Verfahren zum Entfernen von Quecksilber aus einem Wasserdampf und SO₂ enthaltenden Abgas.

Aus der US-A-4 101 631 ist ein Verfahren zur Abscheidung von Quecksilber aus feuchten Gasen, insbesondere aus Erdgas, mit schwefelimprägnierten Zeolithen vom Typ X oder Y beschrieben. Das Verfahren soll unter anderem auch für die Reinigung von Gasen aus der Erzaufbereitung und aus Verbrennungsanlagen geeignet sein. Ein eventueller Gehalt an SO₂ und die damit verbundenen Probleme werden nicht angesprochen. Gemäß der US-A-4 101 631 verwendet man handelsübliche Zeolithe mit relativ hohem Aluminiumgehalt, die bekanntermaßen hygroskopisch sind.

Im Lauf der Beaufschlagung derartiger, schwefelimprägnierter Zeolithe mit sauerstoffhaltigem Gas wird aus den darin enthaltenen Bestandteilen SO₂ und H₂O Schwefelsäure gebildet, die in den Poren des Zeolithen eingelagert wird und sich mit dem Aluminium des Zeolithen zu Aluminiumsulfat umsetzt. Dadurch wird das Kristallgitter des Zeolithen allmählich zerstört und der Zeolith-Formkörper zerfällt. Zumindest aber führt die gebildete Schwefelsäure zum Versotten des Adsorbens.

Im Patent US-A-4 814 152 ist die Entfernung von Quecksilber aus Erdgas mit Hilfe eines Chemisorbenten beschrieben, der im wesentlichen aus Aktivkohle (bevorzugt) oder auch Zeolithen (Typ A, X, Y oder ZSM-5) besteht, die mit Elementarschwefel imprägniert sind. Bei diesem Verfahren weist das zu behandelnde Gas aber keinen nennenswerten Wasserdampfgehalt auf, auch gibt es keine störenden O₂- und SO₂-Mengen.

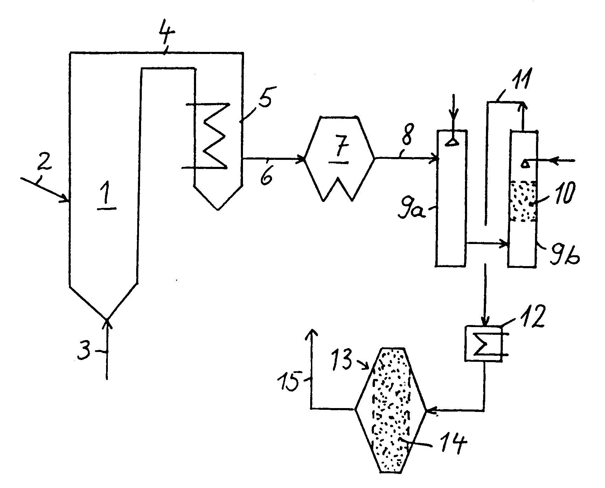

Die EP-A-0 145 539 beschreibt die Abscheidung von Quecksilber aus feuchten Gasen mit schwefelimprägnierten Kohlenstoff-Molekularsieben oder Zeolithen (Beispiele 6 und 16, Figuren 2,3,10 und 11). Dealuminierte X- oder Y- Zeolithe sind nicht erwähnt. Auch in diesem Dokument geht es vorrangig um die Reinigung von Erdgas. Ein eventueller SO₂-Gehalt der zu behandelnden Gase wird, wie in der US-A-4 101 631, nicht angesprochen.

Die DE-A-41 28 106 beschreibt dealuminierte, hydrophobe Zeolithe (ohne Angabe des Typs) zur Adsorption von Kohlenwasserstoffen aus Abgasen in Gegenwart von H₂O und SO₂. Die Hydrophobie des Zeolithen verhindert die Bildung von H₂SO₄. Die Zeolithen sind nicht schwefelimprägniert, eine Abscheidung von Quecksilber wird bewußt vermieden bewußt vermieden.

Es ist ferner bekannt, daß beim Einsatz von kohlenstoffhaltigen Adsorbentien, wie Aktivkohle oder Aktivkoks, entsprechende Sicherheitsvorkehrungen notwendig sind, um eventuelle Störfälle wie Brände, Explosionen und unkontrollierte Freisetzung schadstoffbeladener Stäube und Gase zu vermeiden. Solche Adsorbentien neigen zur Selbsterhitzung bis hin zur Selbstentzündung aufgrund der Reaktionswärme und Umsetzung von Kohlenstoff zu CO oder CO₂.

Der Erfindung liegt die Aufgabe zugrunde, ein Verfahren bereitzustellen, mit dem Quecksilber aus Wasserdampf und Sauerstoff enthaltenden Abgasen mit extrem langen Standzeiten des Zeolithen entfernt werden kann, wobei im Abgas mit einem gewissen Gehalt an SO₂ gerechnet wird und auch geringe Mengen an HCl und HF vorhanden sein können. Erfindungsgemäß gelingt dies mit dem Verfahren nach vorliegendem Anspruch 1.

Der körnige Zeolith kann z.B. im Festbett, Wanderbett oder Wirbelbett angeordnet werden.

Für das Verfahren der Erfindung eignen sich die gängigen, handelsüblichen Zeolithe nicht, weil diese Aluminosilikate hygroskopisch sind, d.h. sie nehmen begierig Wasser auf, wodurch die Poren verstopfen und eine Hg-Chemisorption blockiert wird. Die für das Verfahren der Erfindung zu verwendenden Zeolithe haben einen sehr niedrigen Aluminium-Gehalt, sie sind dealuminiert, wodurch sie ein hydrophobes Verhalten zeigen. Das Si:Al Atomverhältnis beträgt vorzugsweise mindestens 50:1. Die spezifische Oberfläche dieser aluminiumarmen Zeolithe liegt im Bereich von 10 bis 250 m²/g.

Die dealuminierten Zeolithe sind mit Elementarschwefel oder auch Schwefelverbindungen imprägniert, der Schwefel-Gehalt der Imprägnierung liegt üblicherweise im Bereich von 1 bis 20 Gew.%, bezogen auf das Gewicht des imprägnierten Zeolithen. Durch den Schwefel wird metallisches oder ionogenes Quecksilber in Form von HgS auf dem Zeolith-Träger gebunden. Die Imprägnierung mit Elementarschwefel oder den Schwefelverbindungen ist auf verschiedene Weise möglich. Ein Beispiel der Imprägnierung besteht darin, den körnigen, aluminiumarmen Zeolithen mit Schwefeldampf zu behandeln, wobei der Elementarschwefel im Vakuum während einer Verweilzeit von mehreren Tagen in die Poren des Zeolithen eindiffundiert. Dabei wird die Temperatur so eingestellt, daß der Schwefel beim gegebenen Unterdruck dampfförmig bleibt. Der imprägnierte, dealuminierte Zeolith weist schließlich einen Schwefelgehalt von 1 bis 20 Gew.% und vorzugsweise von 5 bis 10 Gew.% auf.

Vorteilhafterweise können die erfindungsgemäß verwendeten Zeolithe nach der Beladung regeneriert und wiederverwendet werden. Zum Regenerieren werden die Zeolithe thermisch behandelt, etwa bei Temperaturen im Bereich von 500 bis 1000°C, und dann erneut mit Schwefel imprägniert. Da mit dem erfindungsgemäßen Zeolithen ununterbrochene Betriebszeiten von einem oder auch mehreren Jahren erreicht werden, führt das Regenerieren des beladenen Zeolithen zu extrem langen Verwendungszeiten dieses speziellen Adsorbens. Versuche zeigten, daß 4- bis 6-maliges Regenerieren eines beladenen Zeolithen machbar ist.

Das zu behandelnde Abgas kommt üblicherweise aus der thermischen Behandlung von Abfällen oder anderen Stoffen. Besonders vorteilhaft ist das Verfahren für die Hg-Entfernung aus einem Verbrennungs-Abgas.

Es wird meist notwendig sein, das zu behandelnde Abgas vor dem Kontakt mit dem körnigen Zeolithen zu entstauben und dazu auch naß zu reinigen. Man führt dann dem körnigen Zeolithen ein Abgas zu, das einen Hg-Gehalt von 0,01 bis 10 mg/Nm³, trocken gerechnet, aufweist. Das von Quecksilber zu befreiende Abgas weist eine relative Feuchte von 5 bis 90 % und zumeist höchstens 80 % sowie pro Nm³, trocken gerechnet, einen SO₂-Gehalt von 1 bis 500 mg und zumeist von mindestens 10 mg auf.

Durch das Verfahren der Erfindung erreicht man den wichtigen Vorteil, daß man ein Abgas, das Wasserdampf, Sauerstoff und SO₂ enthält, mit dem z.B. im Festbett angeordneten körnigen Zeolithen in Kontakt bringen kann, ohne daß Schwefelsäure entsteht und ohne daß die Poren des Zeolithen durch Wasseraufnahme verstopft werden. Vorteilhaft ist ferner, daß der Temperaturanstieg während der Behandlung im Festbett höchstens 20°C und zumeist erheblich weniger beträgt. Es ist deshalb ohne weiteres möglich, das Verfahren auch für Abgase aus der Verbrennung von Abfallstoffen, z.B. Klärschlamm, zu verwenden.

Eine Ausgestaltung des Verfahrens besteht darin, den aluminiumarmen Zeolithen zusammen mit körniger Aktivkohle einzusetzen, wobei man ein Gewichtsverhältnis von 1 : 1 bis 10 : 1 einhalten kann. Die Aktivkohle kann in diesem Fall ebenfalls schwefelimprägniert sein.

Die Zeichnung zeigt ein Beispiel für die Verfahrensführung bei der Behandlung eines Verbrennungs-Abgases.

Einem Wirbelschichtofen (1) gibt man durch die Leitung (2) Abfallstoffe, z.B. Klärschlamm, auf und führt durch die Leitung (3) Luft zu, wobei man die Abfallstoffe in der Wirbelschicht verbrennt. Feststoffhaltiges Abgas strömt durch den Kanal (4) in einen Dampfkessel (5), wo das Abgas gekühlt und teilweise entstaubt wird. Zur Feinentstaubung führt man das Abgas durch die Leitung (6) in ein Elektrofilter (7) und gibt es anschließend durch die Leitung (8) einer zweistufigen Naßwäsche (9a) und (9b) auf. Das Abgas wird dort mit Wasser besprüht, zusätzlich weist die zweite Naßwaschstufe (9b) eine Schüttung (10) aus Füllkörpern auf, durch die das Abgas im Gegenstrom zum Waschwasser hindurchtritt.

Das Abgas in der Leitung (11) ist wasserdampfhaltig, es ist weitgehend frei von Staub, HCl und HF, auch wurde SO₂ teilweise entfernt. Dieses Abgas leitet man durch einen Wärmeaustauscher (12), um seine Temperatur so weit anzuheben, daß es nicht mehr mit Wasserdampf gesättigt ist, sondern eine relative Feuchte von 5 bis 90 % aufweist. Im Absorber (13) strömt das Abgas horizontal durch ein Festbett (14) aus einem körnigen, dealuminierten, schwefelimprägnierten Zeolithen vom X- oder Y-Typ, wo Quecksilber als HgS gebunden wird. Das so behandelte Abgas wird durch den Kamin (15) in die Atmosphäre geleitet. Wenn der Zeolith durch die Beladung mit HgS erschöpft ist, wird er regeneriert oder durch frischen Zeolithen ersetzt. Das erschöpfte Material kann metallurgisch aufgearbeitet oder deponiert werden.

### Beispiel

In einer Laborversuchsanlage werden 4 parallel geschaltete Festbett-Adsorber mit einem synthetisch hergestellten stickstoffreichen Abgas beaufschlagt, das 11 Vol.% O₂ enthält.

Dieses synthetische Abgas enthält ferner, bezogen auf trockenes Gas, pro Nm³ 75 mg SO₂ und etwa 4 mg Hg-Dampf. Die Gastemperatur beträgt 80°C, der Wassertaupunkt liegt bei 60°C.

Die 4 Adsorber enthalten jeweils eine Schicht eines schwefelimprägnierten Adsorptionsmaterials (Schwefelimprägnierung 5 Gew.%), das aus folgender Substanz besteht:
- Adsorber 1:: Dealuminierter Y-Zeolith mit Si:Al-Atomverhältnis von größer 50 : 1,
- Adsorber 2:: handelsüblicher Y-Zeolith mit Si:Al-Atomverhältnis von etwa 5 : 1,
- Adsorber 3:: Aluminiumoxidkatalysator,
- Adsorber 4:: Titandioxidkatalysator.

Die Verweilzeit des Abgases im Adsorptionsmaterial beträgt jeweils 2 sec. Bei Versuchsbeginn erreichen alle 4 Adsorber eine gute Hg-Entfernung entsprechend einem Hg-Restgehalt im behandelten Abgas von unter 0,01 mg pro/Nm³ (Meßgenauigkeit). Schon nach wenigen Stunden Betriebszeit steigt im Adsorber 2 der Hg-Gehalt im Reingas stark an, während gleichzeitig eine steigende SO₂-Abscheidung in diesem Adsorber beobachtet wird. Nach 30 Stunden Betriebszeit wird der Adsorber 2 abgeschaltet, da die Hg-Konzentration im behandelten Abgas praktisch der Eintrittskonzentration entspricht. Das entfernte Adsorptionsmaterial ist stark feucht, seine Kornstruktur ist teilweise zerstört. Das Versagen des Zeolithen im Adsorber 2 ist durch seine große Wasseraufnahme begründet. Der dealuminierte Zeolith des Adsorbers 1 zeigt demgegenüber ein hydrophobes Verhalten, vgl. die Gleichgewichtsbeladungen in der nachstehenden Tabelle, die der Literatur entnommen ist.

| | rel. Feuchte | Zeolith des Adsorbers 2 | Zeolith des Adsorbers 1 |
|---|---|---|---|
| 1. Abgas | 30 % | 28 % | 4 % |
| 2. Abgas | 60 % | 30 % | 5 % |

Hinter den Adsorbern 3 und 4 werden in der kalten Reingasleitung schon ab Versuchsbeginn Schwefelablagerungen beobachtet, d.h. daß die beiden Katalysatoren Schwefelimprägnierung verloren. Nach 800 Stunden steigt die Quecksilberkonzentration am Ausgang des Adsorbers 3 innerhalb von weiteren 150 Stunden auf 0,2 mg/Nm³ an und erreicht nach 1500 Stunden Betriebszeit einen Wert von 1 mg/Nm³. Daraufhin wird Adsorber 3 abgeschaltet.

Im Adsorber 4 erfolgt nach 1750 Stunden ein plötzlicher Hg-Durchbruch, worauf der Versuch abgebrochen wird. Bei Versuchsabbruch hatten die Adsorptionsmaterialien der Adsorber 3 und 4 nur noch weniger als 20 % der ursprünglichen Schwefelimprägnierung, weil der größte Teil der Schwefelimprägnierung während der Versuchszeit abgetragen worden war.

Während der Versuchsreihe wird anstelle des anfangs verwendeten Y-Zeolithen im Adsorber 2 ein dealuminierter Zeolith Typ ZSM5 mit 5 Gew.% Schwefelimprägnierung eingesetzt. Auch bei diesem Adsorptionsmaterial tritt bereits nach weniger als 100 Stunden Versuchsdauer ein Schwefelaustrag auf, der während der ganzen weiteren Versuchsdauer anhält. Nach 950 Stunden Versuchsdauer steigt der Quecksilber-Gehalt im behandelten Gas auf 0,24 mg/Nm³ an und erreicht nach 2500 Stunden einen Wert von 1 mg/Nm³. Darauf wird der Versuch beendet. In der Rohrleitung der Reingasseite findet man Schwefel- und HgS-Ablagerungen.

Als einziges Adsorbens zeigt der dealuminierte Y-Zeolith im Adsorber 1 während der gesamten Versuchsdauer keinerlei Schwefelabgabe und auch keine SO₂-Aufnahme. Selbst nach 6700 Betriebsstunden erfolgt noch eine quantitative Hg-Abscheidung, und bei Versuchsende nach insgesamt 13800 Stunden Versuchsdauer beträgt die Hg-Konzentration auf der Reingasseite nur 0,02 mg/Nm³, bei allerdings auf 0,5 mg/Nm³ reduzierter Hg-Konzentration im zu behandelnden Abgas.

In einer der Zeichnung entsprechenden Großanlage zur Verbrennung von Klärschlamm wird vorgereinigtes Abgas in der Leitung 11 einem Festbettadsorber 13 mit einer Temperatur von 70°C und einer relativen Feuchte von 50 % zugeführt. Der Adsorber enthält ein Festbett aus dealuminiertem Typ-Y-Zeolith mit einem Si:Al-Atomverhältnis im Kristallgitter von größer 50 und mit 4,8 Gew.% S-Imprägnierung. Bei schwankender Konzentration des Gehalts an metallischem, dampfförmigem Quecksilber zwischen 0,08 und 0,3 mg/Nm³ im zu behandelnden Gas werden auf der Reingasseite nur noch Werte von 0,002 mg/Nm³ (Nachweisgrenze) gefunden.

## Patentansprüche

1. Verfahren zum Entfernen von Quecksilber aus einem Wasserdampf und SO₂ enthaltenden Abgas, wobei man das Abgas bei Temperaturen im Bereich von 20 bis 120°C mit einem mit Schwefel oder einer Schwefelverbindung imprägnierten, körnigen Zeolithen vom Typ X oder Y in Kontakt bringt, wobei das Quecksilber in Form von HgS auf dem Zeolith-Träger gebunden wird, und wobei man einen hydrophoben, dealuminierten Zeolithen verwendet, der im Kristallgitter ein Atomverhältnis Silizium : Aluminium von 20 : 1 bis 300 : 1 aufweist.

2. Verfahren nach Anspruch 1, dadurch gekennzeichnet, daß der Typ-X- oder Typ-Y-Zeolith im Kristallgitter ein Atomverhältnis Si : Al von größer 50 aufweist.

3. Verfahren nach Anspruch 1 oder 2, dadurch gekennzeichnet, daß der Zeolith mit Elementarschwefel imprägniert ist.

4. Verfahren nach einem der Ansprüche 1 bis 3, dadurch gekennzeichnet, daß der Schwefelgehalt des körnigen Zeolithen 1 bis 20 Gew.% beträgt.

5. Verfahren nach Anspruch 1 oder einem der folgenden, dadurch gekennzeichnet, daß man ein Abgas mit dem körnigen Zeolithen in Kontakt bringt, das pro Nm³, trocken gerechnet, einen Hg-Gehalt von 0,01 bis 10 mg aufweist.

6. Verfahren nach einem der Ansprüche 1 bis 5, dadurch gekennzeichnet, daß man ein Abgas mit einer relativen Feuchte von 5 bis 90 % und mit einem SO₂-Gehalt von 1 bis 500 mg/Nm³, trocken gerechnet, in Kontakt mit dem körnigen Zeolithen bringt.

7. Verfahren nach Anspruch 1 oder einem der folgenden, dadurch gekennzeichnet, daß das Abgas aus der thermischen Behandlung von Abfällen oder anderen Stoffen stammt.

8. Verfahren nach Anspruch 1 oder einem der folgenden, dadurch gekennzeichnet, daß der körnige Zeolith im Gewichtsverhältnis 1 : 1 bis 10 : 1 im Gemisch mit körniger Aktivkohle verwendet wird.

## Claims

1. A method for removing mercury from an exhaust gas containing water vapour and SO₂, wherein the exhaust gas is brought into contact at temperatures in the range of 20 to 120°C with a granular zeolite of type X or Y impregnated with sulphur or a sulphur compound, the mercury is bound to the zeolite support in the form of HgS, and a hydrophobic, de-aluminised zeolite is used which has an atomic ratio of silicon to aluminium of 20 : 1 to 300 : 1 in the crystal lattice.

2. A method according to Claim 1, characterised in that the type X or type Y zeolite has an atomic ratio of Si : Al of more than 50 in the crystal lattice.

3. A method according to Claim 1 or 2, characterised in that the zeolite is impregnated with elemental sulphur.

4. A method according to one of Claims 1 to 3, characterised in that the sulphur content of the granular zeolite is 1 to 20% by weight.

5. A method according to Claim 1 or one of the following claims, characterised in that an exhaust gas which has an Hg content of 0.01 to 10 mg per Nm³, calculated in the dry state, is brought into contact with the granular zeolite.

6. A method according to one of Claims 1 to 5, characterised in that an exhaust gas having a relative moisture content of 5 to 90% and an SO₂ content of 1 to 500 mg/Nm³, calculated in the dry state, is brought into contact with the granular zeolite.

7. A method according to Claim 1 or one of the following claims, characterised in that the exhaust gas comes from the heat treatment of waste or other substances.

8. A method according to Claim 1 or one of the following claims, characterised in that the granular zeolite is used in a mixture with granular activated carbon in a weight ratio of 1 : 1 to 10 : 1.

## Revendications

1. Procédé d'élimination du mercure d'un gaz résiduaire contenant de la vapeur d'eau et SO₂, dans lequel on met en contact le gaz résiduaire, à des températures dans le domaine de 20 à 120 °C, avec une zéolithe granulée du type X ou Y imprégnée de soufre ou d'un composé de soufre, dans lequel le mercure est lié sous forme d'HgS au support de zéolithe, et dans lequel on utilise une zéolithe hydrophobe, désaluminée, qui présente dans son réseau cristallin un rapport atomique silicium:aluminium de 20:1 à 300:1.

2. Procédé selon la revendication 1, caractérisé en ce que la zéolithe du type X ou du type Y présente dans son réseau cristallin un rapport atomique Si:Al supérieur à 50.

3. Procédé selon les revendications 1 ou 2, caractérisé en ce que la zéolithe est imprégnée de soufre élémentaire.

4. Procédé selon l'une quelconque des revendications 1 à 3, caractérisé en ce que la teneur en soufre de la zéolithe granulée est de 1 à 20 % en poids.

5. Procédé selon la revendication 1 ou une des suivantes, caractérisé en ce qu'on met en contact avec la zéolithe granulée un gaz résiduaire qui présente par m³ normal une teneur en Ag, calculée sur les poids secs, de 0,01 à 10 mg.

6. Procédé selon l'une des revendications 1 à 5, caractérisé en ce qu'on met en contact avec la zéolithe granulée un gaz résiduaire ayant une humidité relative de 5 à 90 % et une teneur en SO₂, calculée sur les poids secs, de 1 à 500 mg par m³ normal.

7. Procédé selon la revendication 1 ou une des suivantes, caractérisé en ce que le gaz résiduaire provient du traitement thermique de déchets et d'autres substances.

8. Procédé selon la revendication 1 ou une des suivantes, caractérisé en ce qu'on utilise la zéolithe granulée en mélange avec du charbon actif granulé dans un rapport pondéral de 1:1 à 10:1.
